(19) Europäisches Patentamt
European Patent Office
Office européen des brevets

(11) **EP 4 768 196 A1**

(12) **EUROPEAN PATENT APPLICATION**

(43) Date of publication:
**01.07.2026 Bulletin 2026/27**

(21) Application number: **24223432.6**

(22) Date of filing: **27.12.2024**

(51) International Patent Classification (IPC):
***B25J 9/16*** *(2006.01)* ***B25J 11/00*** *(2006.01)*
***G06F 40/30*** *(2020.01)* ***G10L 25/30*** *(2013.01)*

(52) Cooperative Patent Classification (CPC):
**B25J 9/1664; B25J 9/163; B25J 11/0005; G06F 40/30;** G05B 2219/40116

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **INTEL Corporation**
**Santa Clara, CA 95054 (US)**

(72) Inventors:
- **GONZALEZ AGUIRRE, David Israel**
  **Hillsboro OR (US)**
- **DE LA GUARDIA GONZALEZ, Rafael**
  **48940 Vizcaya, Leioa (ES)**
- **ALDANA LOPEZ, Rodrigo**
  **45050 Zapopan, Jalisco (MX)**
- **FELIP LEON, Javier**
  **Hillsboro, OR, 97006 (US)**
- **CAMPOS MACIAS, Leobardo Emmanuel**
  **44240 Guadalajara, Jalisco (MX)**
- **BUERKLE, Cornelius**
  **76137 Karlsruhe BW (DE)**
- **TUREK, Javier S.**
  **Beaverton, OR, 97006 (US)**
- **OBORIL, Fabian**
  **75139 Karlsruhe (DE)**
- **CELAL, Savur**
  **Hillsboro OR (US)**
- **GARCIA LEAL, Roderico**
  **45136 Zapopan, Jalisco (MX)**

(74) Representative: **Viering, Jentschura & Partner mbB**
**Patent- und Rechtsanwälte**
**Am Brauhaus 8**
**01099 Dresden (DE)**

# (54) NATURAL-LANGUAGE ROBOT MOTION PLANNER

(57) An apparatus, comprising a memory, configured to store a first data set, comprising kinodynamic data representing a plurality of human-directed movements of a robot; and a second data set, comprising linguistic descriptors of the plurality of human-directed movement of the robot; and a processor, configured to generate a third data set based on the first data set and the second data set, wherein the third data set comprises a plurality of motion primitives of the robot.

Initial Position $T_0$ & Description S
802
Sentence to Vector $f(S) \mapsto \varepsilon_0 \in R^k$
804
Add Initial Configuration to Tree $\Upsilon \leftarrow (\varepsilon_0, T_0)$
806
Target Position $T_f$
810
Calculate Kinodynamic Distance from Tree (leaves) to target
808
Target is Reached
812
True
False
Apply Linguistic-motion Abstractive -Summarization Model to $\epsilon'_0, .. \epsilon'_m$ → Produce Short Natural language description
817
3
Success
815
$P = \{\hat{\epsilon}, \theta_g, \dot{\theta_g}, \ddot{\theta_g}, \in R^{3n \cdot m}\}$
Quit or Timeout requested?
814
True
Failure
816
False
Create AI-Driven Hypothesis Configuration
1
818
Reset $\omega$ Hypothesis-fail counter to 0, Unlocks for $\epsilon'_i \neq \epsilon'_{i+1}$
810
Locks $\epsilon'_i$ such $\epsilon'_i = \epsilon'_{i+1}$ & creates Hypothesis Configuration with Kinematics and Dynamic subspace
4
828
Quit or Timeout requested?
830
Is Kino-dynamic viable & inside Empty Space
820
Add Configuration to tree & Store Shifting Embedding $\epsilon'_i$
2
822
Is $\omega$ > Search Limit ~10 (threshold)
826
Increment Hypothesis-fail $\omega$ +=1
824

FIG. 8

EP 4 768 196 A1

## Description

### Background

Despite the advances in artificial-intelligence-robotics and large language models (LLMs), robots still lack the ability to naturally encode, link, or explain continuous motions using language. This limitation prevents robots from creating and adapting motion plans based on explicit user needs or from generating contextually grounded explanations of why or how a motion is performed. Overcoming these challenges could significantly enhance interpretability, ease robot troubleshooting, and increase motion planning efficiency in demanding tasks involving humans and AI-robots in varied collaborations.

### Brief Description of the Drawings

In the drawings, like reference characters generally refer to the same parts throughout the different views. The drawings are not necessarily to scale, emphasis instead generally being placed upon illustrating the exemplary principles of the disclosure. In the following description, various exemplary embodiments of the disclosure are described with reference to the following drawings, in which:

FIG. 1 depicts a language-driven, explainable robot motion planner;
FIG. 2 depicts the generation of a corpus for the motion planner;
FIG. 3 depicts a user performing a co-execution using an extended reality interface;
FIG. 4 generation of motion primaries;
FIG. 5 depicts the generation of trajectories from language;
FIG. 6 depicts kinodynamic components of input to a variational autoencoder;
FIG. 7 depicts motion planning process, hypothesis creation, and collision-free verification;
FIG. 8 is a flowchart for a motion planner; and
FIG. 9 depicts a more detailed version of the creation of AI-driven hypothesis configurations depicted in FIG. 8.

### Description

The following detailed description refers to the accompanying drawings that show, by way of illustration, exemplary details and embodiments in which aspects of the present disclosure may be practiced.

The word "exemplary" is used herein to mean "serving as an example, instance, or illustration". Any embodiment or design described herein as "exemplary" is not necessarily to be construed as preferred or advantageous over other embodiments or designs.

Throughout the drawings, it should be noted that like reference numbers are used to depict the same or similar elements, features, and structures, unless otherwise noted.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

The phrases "group (of)", "set (of)", "collection (of)", "series (of)", "sequence (of)", "grouping (of)", etc., in the description and in the claims, if any, refer to a quantity equal to or greater than one, i.e., one or more. The terms "proper subset", "reduced subset", and "lesser subset" refer to a subset of a set that is not equal to the set, illustratively, referring to a subset of a set that contains less elements than the set.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art.

The terms "processor" or "controller" as, for example, used herein may be understood as any kind of technological entity that allows handling of data. The data may be handled according to one or more specific functions executed by the processor or controller. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

As used herein, "memory" is understood as a computer-readable medium (e.g., a non-transitory computer-readable medium) in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, 3D XPointTM, among others, or any combination thereof. Registers, shift registers, processor registers, data buffers, among others, are also embraced herein by the term memory. The term "software" refers to any type of executable instruction, including firmware.

The term extended reality (XR) as used herein may be generally understood as an umbrella term that utilizes any of augmented reality (AR), virtual reality (VR), mixed reality (MR), or any combination of same. In one example, XR may refer to the use of one or more sensors to detect human body movement (e.g., a movement of one or more human appendages) and may be configured to generate sensor data that is used to control a robot to move correspondingly to movement of the one or more human appendages. For example, a pick-and-place robot may be controlled with the help of XR. In this manner, a human moving the human's arm to simulate picking up an item, moving the item, and placing the item in a location different from where it was picked up may, in conjunction with XR, control the robot to perform similar picking, moving, and placing actions.

A rapidly exploring random tree (RRT) as used herein refers to one or more algorithms that are designed to search nonconvex, high-dimensional spaces by randomly building a space-filling tree. In this manner, the tree may be generated step-by-step or incrementally, such as by using samples that are randomly drawn from the search space. The RRT may be inherently biased to grow towards large unsearched areas of the problem. RRTs may be particularly useful for problems with obstacles and differential constraints (e.g., kinodynamic problems) and thus may have many applications in autonomous robotic motion planning. In essence, many RRTs generate open-loop trajectories for nonlinear systems with state constraints. RRTs may be particularly useful at computing approximate control policies to control high dimensional nonlinear systems with state and action constraints.

Conventional motion planners for robot applications overlook or cannot consider task semantics (e.g., adjective cues and non-geometric context) while searching for continuous motion trajectories in variable, semi-structured tasks. Conventional motion planners are constrained to geometry and neglect valuable semantic subspaces. That is, current motion planners do not use semantic cues during the exploratory search space, which presents an opportunity to improve performance to generate improved downstream capabilities with prompts.

A central problem is found during motion-hypothesis generation, where only robot-joint-states are considered, thereby ignoring or disregarding the task's semantic context. Without using the task's semantic dimensions as a guide, solutions are limited to geometric insights and miss-semantic trajectories (e.g., language-driven trajectories) that help to explain actions to humans. As a result, without a semantic subspace (e.g., language embedding), connecting the robot's movements with the meanings of specific tasks, motion planning algorithms (regardless of whether they are sampling, optimization, or hybrid algorithms) are often stuck in disjointed, non-convex regions. This limitation affects the quality of solutions and can prevent rapid achievement of motion plans. By creating a space that combines both kinodynamic movement and semantic information, it becomes possible to link geometrically distant sub-trajectories with semantically meaningful sub-trajectories, thereby rapidly arriving at explainable solutions for motion plans. Integrating task semantics through language cues (e.g. through nouns and verbs) and/or descriptive episodic hints (e.g., through adverbs and adjectives) during motion planning can address significant limitations and offer large-value opportunities.

Furthermore, it is notable that robots' joint-trajectory-plans are not explainable and do not link pre-semantic states or post-semantic states. That is, explainable motions are crucial for effective human-robot collaboration, especially in applications involving dialog interfaces. In such scenarios, it may be desired or even essential to have dialogs that explain the types or attributes of motion as conceptualized by humans. As an extension of this, it may be critical to ensure that human-robot collaboration include motions demonstrated by humans or synthesized by robots that can be described and interchanged in natural language by all intelligent agents. This creates a motion-language endowment that contributes to productive and trustworthy synergy between humans, AI-robots, and other AIs. Moreover, motion-language improves diverse AI tasks via prompting. The integration of motion-language prompts can significantly enhance AI task performance. Thus, language cues derived from semantic-motion trajectories associated with kinodynamic plans can aid other control and perceptual tasks by providing prompts.

With respect to human-to-robot programing, such as by demonstration, teleoperation, and/or language, consider the task of describing how to assemble a CPU and memory modules to a motherboard. While teleoperating the robot, the human describes each movement in natural language adding semantic cues in form of nouns, adjectives and adverbs. For example, while reaching and extracting a memory module from the memory module tray the human verbal description could be "move over the memory tray quickly, then carefully grasp a module by its corners, lift it vertically and slowly until it clears the tray by a few centimeters." This example highlights how to combine careful operations that require delicate handling and gentle actions with quick transport operations to efficiently perform the task at hand.

In a second example use-case, consider an application in the service robotics domain, where the human teaches the robot how to open a drawer, grasp a glass, fill it with water, and transport it to a tray. The task description provided together with the XR teleoperation of the robot could be: "Reach for the drawer handle and do a caging grasp; and do a compliant pull to adapt to the hinged motion of the door. Reach for a glass by its side and grasp it. Slide it out gently and move it below the faucet in an upright position." After the faucet has been run, and the glass is full, the description continues as follows: "Transport it upright to the tray and avoid jerky motion. Gently place it onto the tray." This use-case proves the flexibility of teaching long-horizon tasks with implicit action segmentation and the explicit specification of task constraints.

When generating a language-driven, explainable, robot motion planner, one must consider (1) how to economically create online robot motion plans benefiting from language-driven semantics that exploit text descriptors and humans' demonstrations; (2) how to use language prompts for helping the robot's motion planner to generate bi-modal kinodynamic plans considering both physical and semantic aspects of the task and embodiment; and (3) how to clearly describe these plans in detail (e.g., step-wise) or as a whole (e.g., episodic-wise) using natural language for humans, and how to explain other downstream AI tasks in joint-trajectories and language (e.g., using text or speech).

As human-robot applications increase in prominence and import, so too does the central question of integrally generating and exploiting kinodynamic motion plans that leverage compact and efficient language descriptors during hypothesis generation via probabilistic generative AI gain in importance. In such tasks, language plays a key role for input and output, and for describing motions, such as, for example, soft, slow, firm, agile, etc. Using the principles disclosed herein, AI downstream task compositions may be augmented by using motion-to-sentences and sentences-to-motion for natural human-robot interfaces. In this manner, the proposed language-driven motion planning approach and training method may bridge the AI gap between small language embedding models and robot motion, thereby fostering intuitive human-robot synergy.

One benefit of the framework disclosed herein is economic motion guaranties. In this manner, motion hypotheses that are contained in custom tailored latent spaces shaped according to task specifications are collected via multimodal (e.g., using natural language, using extended-reality-controllers) human demonstrations. This may be used for data-production for variational autoencoders (VAEs) that are trained to synthesize data via probabilistic generative models, and thereby avoiding costly data-set collection and annotation (e.g., a data set that is entirely human generated and/or manually labeled). The framework disclosed herein enables context-dependent, scalable, and economical generation of motion-planning data for training via low dimensionality probabilistic motion primitives (MPs). As will be described in greater detail, these probabilistic MPs may be created based on human demonstrations, such as by using for XR equipment.

Improved kinodynamic and semantic exploration performance may be achieved using a (compact) probabilistic neural network, such as a VAEs, where joint semantic and kinodynamic batch-inference is obtainable during inference through parallelization for hypothesis generation. This is can be achieved by using a single encoding pass and multiple variational decoding passes.

The robot's ability to describe a motion promptly and coherently with natural language provides improved trust within the context of human-robot interaction. This may be observable, for example, in robots exhibiting smooth and predictable psychomotor skills expressed as trains-of-thought in concrete behaviors when reacting to circumstances of each scenario. Namely, motion plans with explicit language formulation may connect each joinstep in a motion plan for granular or summarized narrative of each of the actions.

Attention is now turned to the question of how to create online effective kinematic and dynamic (e.g., kinodynamic) robot motion plans that integrate geometric and semantic information to produce collision-free and coherent joint trajectories, and that are accompanied by natural language descriptions explainable at the single step and as a whole traj ectory.

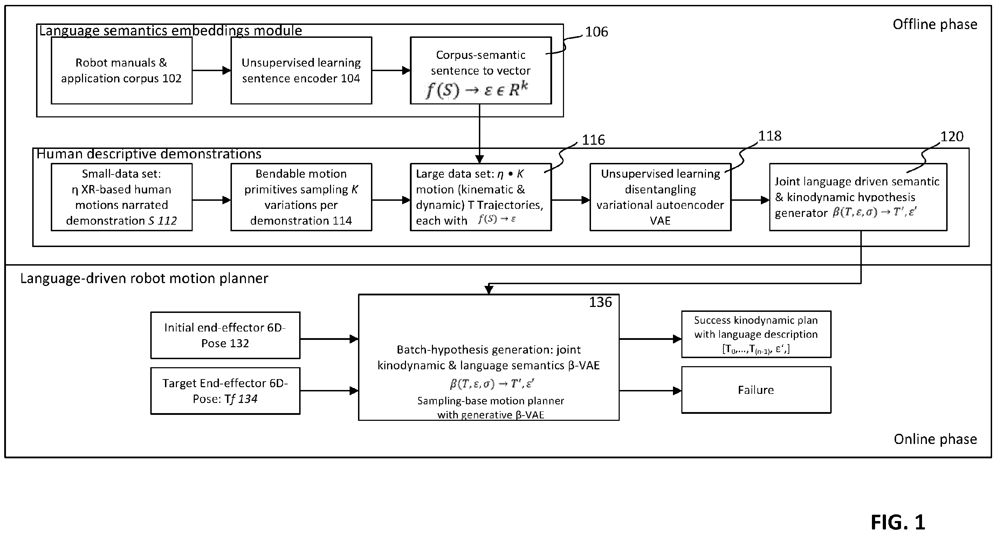

FIG. 1 depicts a language-driven, explainable robot motion planner. The top portion of FIG. 1 depicts an offline-phase, which includes a section to determine language semantic embeddings and is thus labeled a "language semantic embeddings module" and a section for determining human descriptive demonstrations, which is labeled a "human descriptive demonstrations" section. The bottom portion of FIG. 1 depicts the online phase, which is labeled as the "language driven robot motion planner".

Starting with the offline phase, language embeddings are created from robot manuals and application documents using unsupervised learning, and thereby transforming sentences into feature vectors. Human-robot task co-executions, such as via XR interfaces, may be used to generate motion primitives, thereby creating large, annotated datasets. These datasets may be used to train a variational autoencoder to map the robot's state to the next step, while being biased by language descriptors and a random seed, thereby linking semantic and kinodynamic models. Starting with the offline phase, the process begins with the creation of language embeddings, such as from robot manuals and/or an application corpus 102. These manual and process descriptions may be referred to or understood as a corpus (a1). This corpus may be processed through a model using unsupervised learning (a2) (referred to herein as the unsupervised learning sentence encoder 104) to transform short descriptive sentence S into a feature vector $f(S) \mapsto \varepsilon \in R^k$ (depicted as corpus-semantic sentence to vector 106) within a semantic space $R^k$. This may be performed for any single robot, any group of robots, any class of one or more robots, or otherwise. In some circumstances, it may involve robot manuals for any one particular robot and/or any other documentation related to a specific robot, but may be applied to other similar robots. The specific model may be a sentence encoder, which may be an AI that encodes text into high-dimensional vectors. These vectors can then be used for text classification, semantic similarity, clustering and other natural language tasks. The sentence encoder may be selected and/or trained to receive text with sentences, phrases, or short paragraphs and to convert same to multi-dimensional vector outputs. Any sentence encoder, or any other model capable of performing the tasks disclosed herein, may be utilized for this aspect. No specific sentence encoder is discussed at this juncture; instead, the skilled person will appreciate how to determine a suitable sentence encoder for the tasks disclosed herein.

Turning now to the next portion of the off-line stage disclosed as "human descriptive demonstrations", a human may perform a plurality of human-or robot task co-executions (labeled as small-data set *n* XR-based human motions narrated demonstration S 112), such as controlling the robot to perform a particular task (e.g. picking up an object, moving an object, connecting objects, separating objects, releasing objects, etc.). These task co-executions may be performed, for example, using XR, such that one or more sensors are connected to the human operator, or are otherwise configured to capture or detect movements of the human operator. In this manner, the robot may be controlled to move in a more human-like way. For example, the human may control a robotic arm to pick up an object at a first location and deposit the object at a second location. The human may do so using a fluid, smooth motion, and because the robot is controlled by the human's operation, the robot may also perform this picking and moving task with a similar fluidity and smoothness, or in any event, with more fluidity than would likely otherwise be achieved by programming the movement at the joint-level. Otherwise stated, although it may be difficult to program a robot to perform a task in a fluid, human-like manner, the robot may be capable of performing this task when it is being controlled based on movements of the human appendage. The human may perform the co-execution task multiple times, thereby generating a small data set of human-controlled robotic motions.

In addition, the human may narrate the co-execution task using one or more natural language descriptors. This may include, for example, "picking the object up carefully", "moving the object slowly and fluidly", or "setting the object down softly", or any other number or type of task descriptors. The narration may include one task descriptor for a single task, or multiple task descriptors for a single task. The task descriptors may be a single word, a small number of words, a phrase, a sentence, or a plurality of sentences. That is, the human-robot task co-executions (b1) as described above may be accompanied by a short narrative, which may provide cues to compose generative motion primitives (b2) able to synthesize large amount of trajectory samples $\kappa$ by simulating 6D offsets from the origin and destiny of the robot end-effector employing probabilistic movement primitives (labeled as bendable motion primitives sampling $\kappa$ variations per demonstration 114).

Drawing from these motion primitives, large datasets (b3) can be generated with associated language annotations, namely $\eta \cdot \kappa$ samples per motion segment 116. Combining this data and the language embedding form, it is possible to train a VAE to map from an instantaneous dynamic state of the robot T to the next discrete step T' biased by the $\varepsilon$ language descriptor (b4) and a Gaussian-distributed random seed $\sigma$ (depicted as unsupervised learning disentangling VAE 118). This generative model $\beta(T, \varepsilon, \sigma) \mapsto T', \varepsilon'$ maps inputs into distributions joining the language-semantic manifold with the kinodynamic model of the specific robot upon it was trained. Of key important is that the ability to sample (via $\sigma$) diverse robot-task configurations $|\{T'\}|$ within a constrained triplet $[T_o, T_f, T_i]$ linking a feasible path within a sematic kinodynamic space.

The AI hypothesis generator (depicted as joint language driven semantic & kinodynamic hypothesis generator 120) is a technical enabler. In this manner, the language-driven hypotheses generator's role is to generate batches of potential next steps in a motion plan as shown in the online phase. At runtime, the inputs are the first or current 6D pose of the end effector $T_o$(c1), and a goal or final pose $T_f$(c2). At each step $T_i$ along the trajectory, multiple checks may be needed to ensure collision-free movement (e.g., movement in which the robot does not collide with anything in its environment). With the environment and the robot itself (c3). Computationally, it is of note that this permits the concurrent generation of multiple output hypothesis in batch form requiring a single encoding pass for multiple variational decoding generations (b5). This results in a language embedding at each step ($T_i$, $\varepsilon_i$), describing the motion with interpolation and summarization capabilities. This may be significant at least because it is possible to create a motion plan and describe it at each step. In this manner, users and AI agents can obtain more explicit semantic information from the trajectory. Those added cues inform about secondary-tasks being solved, motion styles, overall process logic, hidden constraints unveiling semantic-endowed motion plans with superior control and interfaces results. This ability transforms the human-robot collaboration empowering mutual knowledge transfer between humans and AI at scale.

Attention will now be turned to the matter of how to ensure that robot motions are interpretable by humans, specifically proving generalization capabilities while preserving task-specific motion signatures to foster trust, intuitive movements, with economic and dependable human-robot collaboration.

In the Online phase (see "Online Phase" in FIG. 1), the first pose 132 and the target pose 134 (for example, the first 6D pose and the target 6D pose) are inputs, and at each step, collision-free movement is ensured. As stated herein, multiple hypotheses may be generated 136 with a single encoding pass, thereby providing language embeddings at each step to describe the motion. This enhances human-robot collaboration by explaining actions, thereby offering more information about tasks, motion styles, process logic, constraints, and meaningful paths. Unlike existing LLMs and motion planners that run at a high symbolic level, principles and methods disclosed herein work at a continuous sub-symbolic level, thereby closing the gaps between motion and language through very few human demonstrations. This results in shallower, more energy-efficient and time-efficient models compared to LLMs, thereby allowing for simultaneous geometric and dynamic feasibility in motion plans online and onboard.

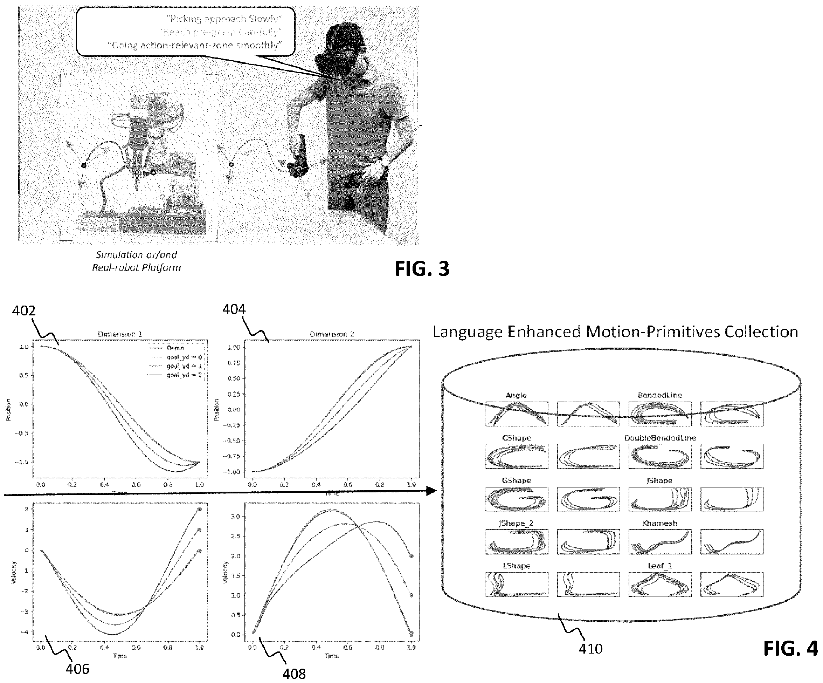

In the Offline phase, language embeddings are created from robot manuals and application documents using unsupervised learning, transforming short descriptive sentences (from one sentence string to a short paragraph) into k-dimensional feature vectors within a domain semantic space. Human-robot task co-executions (immersive operation) via XR (teleoperation) interfaces, accompanied by short speech-to-text narratives, compile motion primitives that can synthesize feasible trajectories, namely language plus motion as learning samples. This process creates extensive datasets with rich language annotations economically for the specific robot embodiment and kinematics. The datasets are used to conduct unsupervised training with variational autoencoder (VAE), mapping the robot's dynamic state to the variational next-step, biased by language descriptors and a random generative seed. This model training links the language-semantic manifold with the robot's specific (kinematic and dynamic) model, allowing the generation of samples for diverse task configurations within a semantic-kinodynamic-space. In the online phase: i) a language prompt such as "picking tray smoothly," ii) initial 6D pose of the end effector, and iii) the goal pose of the end-effector are the three inputs. At each planning/search step along the trajectory, checks (see, e.g., FIG. 4) ensure collision-free movements. Of particular note is that the above allows for the generation of multiple output hypotheses concurrently, thereby requiring a single encoding pass for multiple decoding generations. The resulting plans provide language embedding at each step, granularly describing the motion with interpolation and abstractive summarization capabilities. This allows the robot to explain its actions at each step via natural-language, enhancing human-robot collaboration, and providing more information about secondary tasks, motion styles, process logic, hidden constraints, and meaningful paths conveying task and robot intents.

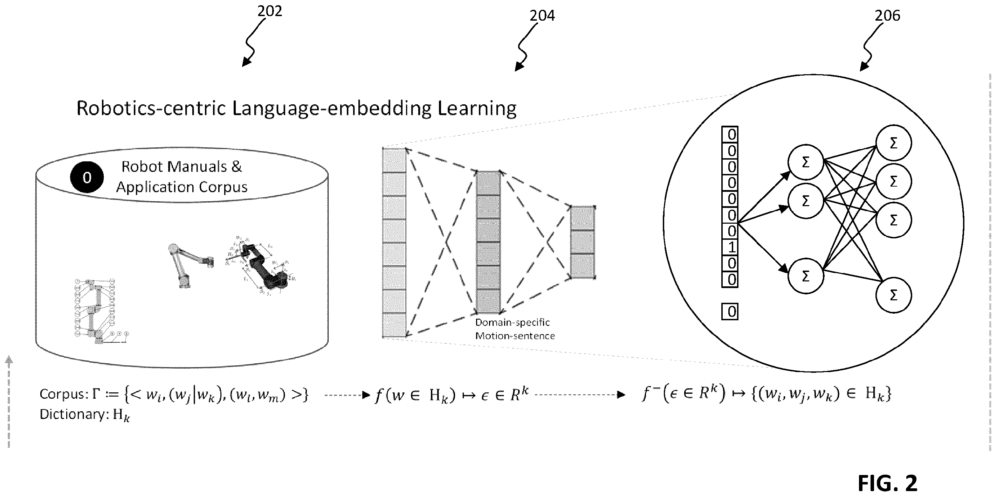

FIG. 2 depicts the generation of language embeddings from robot manuals and application documents, collectively referred to as the corpus W, as described above relative to 102. First, various documents, such as, for example, robot manuals and application corpus (e.g., documents related to the task or tasks to be performed) documents 202 may be selected. The selection of documents for use in this manner is somewhat flexible, both in terms of volume and subject matter, and the selected documents can be applied to multiple use cases and robot types. This data is encoded 204 such that $\varepsilon$ E $R^k$. The information gathered by these texts allows the underlying processor model to create a deep neural network (DNN) structural composition such as in, but not limited to, Skipgram embeddings 206, for example. This means that a sentence S E $w^+ \subset \{W\}$ within the vocabulary $H_k$ contained in the corpus *W* can be semantically related using L1, L2, cosines and other metrics. This means that for $f(S_i) \rightarrow \varepsilon_i \in R^k$ and respectively $f(S_j) \rightarrow \varepsilon_j \in R^k$ if $S_i$ and $S_j$ describe a similar robot motion-action (varying order of words or using synonyms) despite their different wording if $\left|\varepsilon_i^T \cdot \varepsilon_j\right| \approx 0$ . This may be of particular importance for setting up a semantic-space where locality implies meaning of sentence embeddings. In such space $R^k$, traversing across clusters of points defines gradual semantic variations. In practical terms, this may be trained once using an unsupervised DNN and is thereafter usable for a variety robots and task types contained within the corpus. Note that this embodiment-independent process corresponds to the topmost portion of FIG. 1. It is also noteworthy that using retrieval automated generation (RAG) and large language models (LLMs) is possible to create such embeddings; however the ability to do this in a small computational development with all computations on board would require a smaller language embedding model.

Regarding the task co-execution described above, one or more $\eta$ human-robot task co-executions may be performed, such as by a user using one or more XR teleoperation interfaces. FIG. 3 depicts a user performing a co-execution using an XR teleoperation interface, in which the user controls a robot to move in a manner corresponding to the user's human movements. As depicted in this figure, these co-executions are accompanied by short narratives (e.g. from the user) that provide the necessary language cues for the task. That is, the human is issuing movement commands with a controller and also using speech. The human may include style and/or intentions, such as slowly, carefully, smoothly, etc. In this manner, the human user functions as a bridge between the language embedding and the composed kinodynamic function of the robot in a simple and natural teleoperation demonstration.

Despite the value of human-controlled motion with linguistic descriptors, it may not be practical or desirable for a human to generate sufficient trial data. That is, due to the cost of human annotation while describing such collection of action-segments (a whole task is a sequence of multiple segments), this subprocess may ideally be performed in a small order, such as with 2-8 demonstration trials in each application domain, although the use of fewer or more trials is possible. Should a modest number of trials be performed, it may be desirable to transform the raw data of these trials into bendable probabilistic models to produce large training data-set on-demand in real-time as the VAE is trained.

Each narrated demonstration will be subject to a certain amount of human variability, thereby creating a unique motion vector, even when the task for the demonstration is the same task as in other demonstrations. Said differently, a human repeating the same pick-and-place operation will inevitably vary the operation in terms of position or velocity each time. Of course, users can experiment with teleoperating the robot to understand the physical system's embodied limitations. Such practice may be useful to achieve a more consistent mapping of adjectives in the narrative. For instance, when a user commands the robot to move along a trajectory described as "fast," the robot may execute the motion at 60% of its maximum attainable velocity at the fastest point. Higher attributes, such as "maximum speed" or "maximum/minimum acceleration," may correspond to 10%-90% of the robot's capabilities, providing a tolerance margin for trajectory generation. A word-wise scale can optionally be defined based on any of the industry, use case, human proximity, or target objects without affecting the overall algorithms and interfaces.

Generative motion primitives can synthesize many trajectory samples $\kappa$ by simulating new 6D end-effector poses (scenario offsets and velocities) from the robot end-effector's origin and destination using probabilistic movement primitives. The challenge is to generate trajectories that adapt to different start and goal positions, while at the same time capturing the narrative of the demonstrations. This can be achieved by separating the problem into two parts. First, the safe kinodynamic trajectories are generated. Second, a natural language description of the generated trajectories is generated.

Given a set of demonstrations, the motion planner may generate three distinct MPs, representing the mean, the upper bound, and the lower bound of the demonstrated trajectories, as depicted in FIG. 4. This can be seen in 402-408, which depict a demonstration, and then an upper and lower bound of the demonstrated movement by dimension. For example, 402 depicts a mean movement as well as upper and lower bounds of the movement in a first dimension, 404 depicts a mean movement as well as upper and lower bounds of the movement in in a second dimension; 406 depicts a mean movement as well as upper and lower bounds of the movement in in a third dimension; and 408 depicts a mean movement as well as upper and lower bounds of the movement in a fourth dimension. These may be the basis for a plurality of motion primitives as depicted in 410. At run-time, the motion planner may solve an optimization problem to generate a controller that is guaranteed to follow the mean trajectory while always staying within the bounds. Depending on the parameters of the model, the obtained probabilistic MPs can be tuned in diverse ways, for example, to closely follow the reference at the cost of increasing the control effort or vice versa. Hence, by exploring the design space of a probabilistic MP, one can generate a variety of trajectories that follow the safety bounds from the demonstrations. To do this efficiently, different methods such as Monte Carlo search or Bayesian optimization can be used.

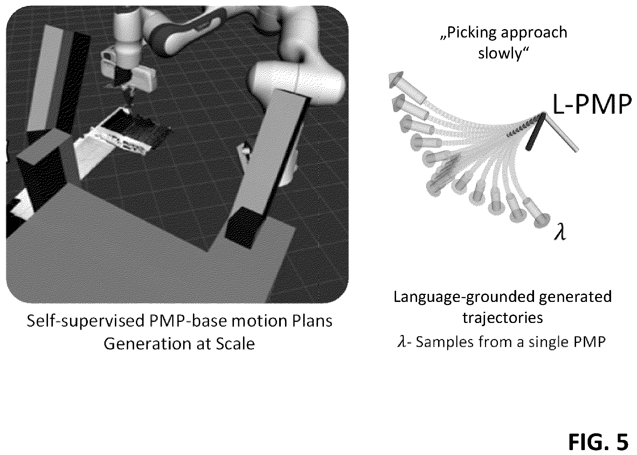

For the second offline part, an LLM may be used to describe the trajectories. To achieve this efficiently, scene graph that captures the critical context information that is needed to describe the robot movement in a scenario is constructed. A relevant examiner may be the difference between labelling an action as moving carefully versus labelling the action as moving slowly, assuming the robot moves at the same speed in both cases. The latter could be used when the robot is moving in free space, i.e., with no obstacles nearby, while the former would make sense when the robot is navigating a cluttered space, near fragile objects. Hence, to each labelled demonstration, a sequence of frames is appended in which the state of the robot in relation to the scene elements from different views is abstracted. Thereafter, a new, randomized scene is synthesized, and the DMP is used to move the robot from random start and goal conditions. A sequence of frames from the generated scene as before may be obtained, and then this may be input with the offline examples to the LLM. The LLM can then be asked to generate a narrative based on the examples. The process is repeated to create a dataset consisting of pairs of robot trajectories and corresponding natural language descriptions. This process allows for the economical and rapid creation of large datasets with associated language annotations, resulting in $\eta \cdot \kappa$ samples per motion segment. FIG. 5 depicts the generation of trajectories from language according to the above. In this example, the robot is instructed to perform a picking action slowly, and the motion planner generates $\lambda$ samples from a single motion primitive (L-PMP refers to a language-grounded trajectory from a primary motion primitive).

Thereafter, an unsupervised generative AI training may be performed with a kinodynamic hypothesis generator, such as by using a VAE. FIG. 5 depicts training and inferring with a VAE for motion planning. Such training generally involves creating kinodynamic hypotheses, such as by using data generated in the processes depicted in FIGs. 3 and 4.

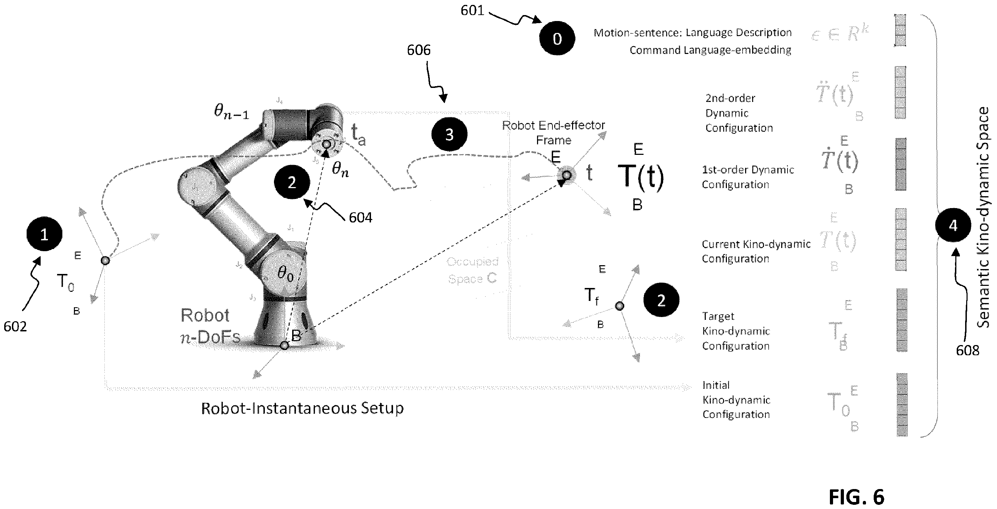

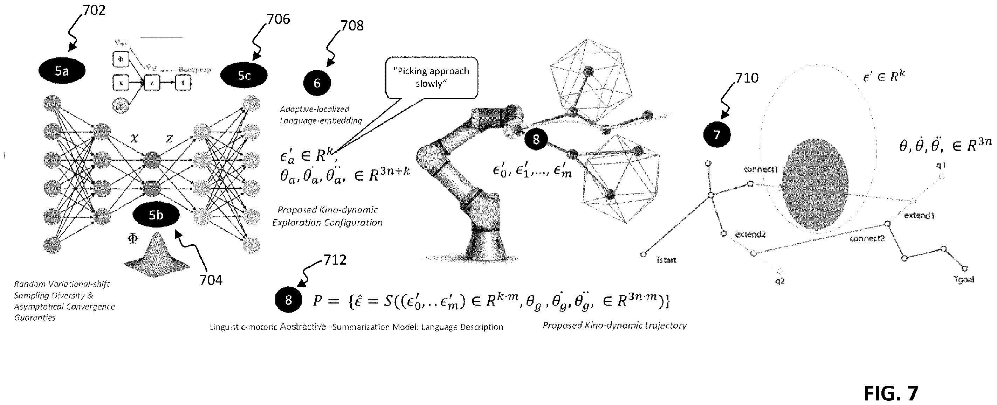

FIG. 6 depicts kinodynamic components of input to a variational autoencoder, and FIG. 7 depicts motion planning process, hypothesis creation, and collision-free verification. FIG. 7 further shows the eight steps of processing the language prompt (0) 601. Turning to FIG. 6, a kind of rigid transformation with six degrees of freedom (e.g., 6 DOF, 6D) from a first frame (Frame A) to a final frame (Frame E) can be seen. First, in step 602, also understood as frame A, the first 6D end-effector pose and its associated joint angles n>=6 are provided by the dataset. Second, 604, the end-effector's final 6D pose is also supplied. Third, 606, at each step of the plan, the transformation $T_b^E \in SE^3$ is used to compute the first $\dot{T}_b^E$ and second $\ddot{T}_b^E$ order derivatives from the motion primitive, either through numerical differentiation or by minimizing constraints and ensuring numerical stability. Fourth, in step 608, these kinodynamic elements are combined with the user-defined language embedding $\varepsilon$ to define the input point in the semantic kinodynamic space.

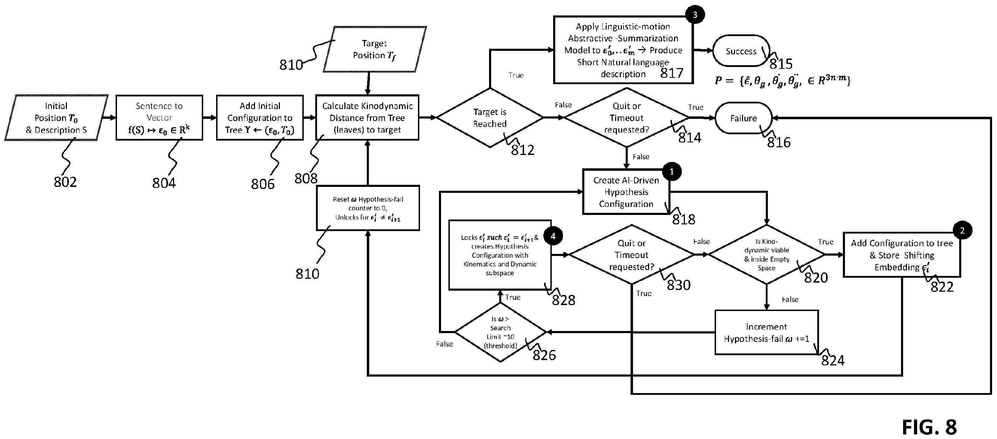

Turning to FIG. 7, since the VAE is trained 702 using stochastic backpropagation (e.g., using reparameterization 704), once training is complete, multiple decoding passes can be applied to a single input point, generating multiple hypotheses for the RRT-like motion planner 708. One advantage of the VAE is its use of the language semantics $\varepsilon$ embedding during the search, which conditions the kinodynamic trajectory by shortening or expanding distances kinodynamic distances. This results in non-obvious geometric paths that preserve the motion's semantic signature, as shown by the expanded hyper-ellipsoid in 710. This expanded hyper-ellipsoid is provided as an illustrative concept, and it is expressly noted that the shape may vary from case to case. Finally, the motion plans, as sequences of kinodynamic configurations with collision checks as shown in FIG. 8. This includes language embeddings at both the step and trajectory levels through summarization 712, which may be highly valuable for various downstream tasks.

The online phase of FIG. 1 will now be explained in greater detail using FIG. 8, which describes the motion planner, which itself is a module that implements a sample-based method. Although a variety of options are available, an RRT may be particular well-suited. This motion planner may be able to summarize a resulting trajectory in the embedded semantic-language space for the entire trajectory, and/or the motion planner can explain the resulting trajectory step-by-step by selecting curvature inflection points in the feature space to reduce verbosity. Using the hypothesis generator (e.g., the unsupervised probabilistic learning in a VAE described above), the motion planner generates hypotheses for the next state based on user prompts. The motion planner checks (e.g., evaluates) these hypotheses with respect to velocity, acceleration, joint limits, and empty space in the scenario and creates a possible state-space path. These checks and the stepwise tree-graph construction inherit the benefits of the RRT with respect to convergence and anytime solutions (e.g., with respect to an algorithm or solution that can return a valid result even if interrupted before completion, such that the quality of the result may improves the longer the algorithm is allowed to run). Finally, the motion planner may present the trajectory solution with a summary language descriptor that can be decoded into various human languages as needed. Given the exploratory nature of the enhanced RRT, the user does not need to define coordinates in either task or joint spaces at any point. While cues about occupancy objects can be added by examining the Deep Neural Network (DNN) of FIG. 8, the motion planner still needs to perform collision tests when validating the hypotheses created in FIG. 8, 818. Accordingly, the marginal distance is considered as a language-derived cue to be an added feature of this implementation.

FIG. 8 depicts a step-by-step sampling-based approach for option of the motion planner. The motion planner receives the initial position/pose of the robot $T_o$ (e.g., the initial or current 6D pose of the end effector) and a motion language prompt, S, which may be a sentence or a short paragraph defining any of the style, aim, or attributes of the desired motion plan 802. The motion planner processes the initial position, $T_o$, and the motion language prompt, S, as described in detail above to generate a motion vector 804. This is then added to the motion tree as an initial configuration 806. The motion planner also receives a target position $Tf$, which may be understood as goal position/pose or end position/pose 810. The motion planner calculates a kinodynamic distance from the tree leaves to the target position $Tf$ 808.

Regarding trajectory planning, the device performs multiple collision checks, wherein, at each step, $T_i$, along the trajectory, the motion planner performs multiple checks to ensure collision-free movement with the environment (e.g., the robot does not collide with obstacles or outside objects) and the robot itself (e.g., the robot does not move in a manner that causes it to collide with itself). If the target is reached without collision 812, then the motion planner may apply a linguistic-motion abstractive-summarization model to generate a short, natural language description of the movement 817 that was arrived at from step 812, and the motion planning is complete 815. Assuming that the target is not reached, the motion planner may evaluate whether a timer has elapsed 814 (e.g., the motion planner may have a maximum time allotment in which to select a trajectory, such as to avoid undesirable latency). If the time has elapsed, then the process may fail 816. Assuming, however, that the timer has not elapsed, then the motion planner may implement a model to generate an AI-driven hypothesis configuration 818. Upon generating the hypothesis configuration at 818, the motion planer considers whether the motion hypothesis configuration is kinodynamically viable (e.g., corresponds to available joint movements, acceptable velocities and/or accelerations, etc.) and inside empty space (e.g., collision free) 820. If this is true, then the motion planer adds this hypothesis configuration to the RRT tree and stores the corresponding shifting embedding 822. Following this, the hypothesis failure counter is reset to 0 at 810, and the kinodynamic distance is calculated at 808. If, however, the motion planner determines at 820 that the hypothesis configuration is not kinodynamically viable or is not in empty space, then the motion planner increments a hypothesis-fail counter 824. The hypothesis fail counter may have an allowable maximum, and the motion planner may determine whether the maximum has been reached on the fail counter 826. If the maximum has been reached, then the motion planner may lock $\epsilon_i'$ and create a hypothesis configuration accordingly 828. If a quit or timeout is requested 830, then the process fails. Otherwise, the motion planner determines whether the new hypothesis corresponds to kinodynamically viable space 820, and the procedure continues as described above. If the hypothesis counter has not reached its threshold at 826, then the process returns to the generation of AI-driven hypothesis configuration of 818.

Of particular note, the motion planner is capable of batch hypothesis generation, in which the motion planner generates multiple output hypotheses concurrently in batch form, which may require only a single encoding pass for multiple variational decoding generations.

The resulting plan provides a language embedding at each step ($T_i$, $\varepsilon_i$), describing the motion with interpolation and summarization capabilities. This allows the robot to create a motion plan and describe its actions at each step, thereby providing users and other AI agents with more information about any of secondary tasks, motion styles, overall process logic, hidden constraints, and best paths. This capability may enhance human-robot collaboration and mutual knowledge transfer at scale.

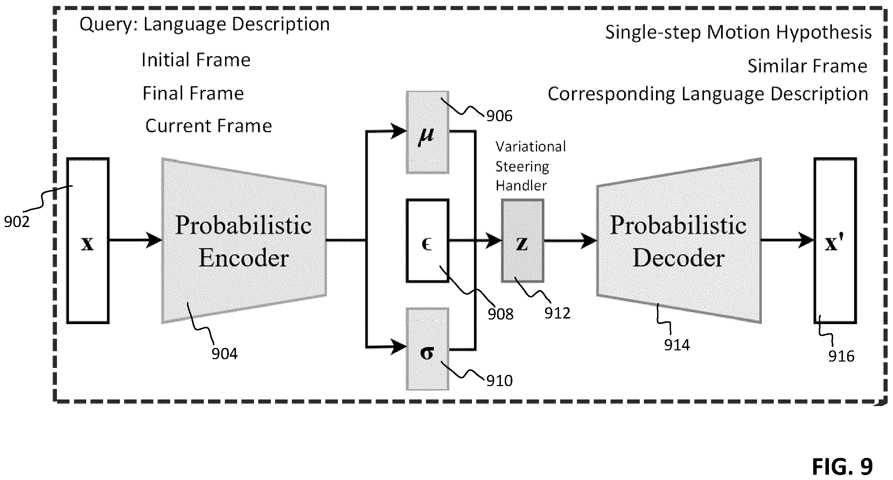

FIG. 9 depicts a more detailed version of the creation of AI-driven hypothesis configurations as depicted in FIG. 8, 818. Creating explainable robot motion plans involves language (semantics), kinematic (geometry), and dynamics (masses, forces & acceleration) to describe meaningful actions beyond mere joint trajectories and occupancy spaces. Such robot motion plans may be created by generating and selecting partial motion segments 902 (e.g., a next configuration used as a hypothesis in a sampling search) in a semantic kinodynamic feature-space using probabilistic generative artificial intelligence (AI) (e.g., probabilistic encoder 904) while enhancing deterministic rapidly-exploring tree (RRT) validations. The probabilistic encoder 904 determines the mean ($\mu$) 906, a perturbation factor ($\varepsilon$) 908, and the standard deviation ($\sigma$) 910, which are combined according to $z = \mu + \sigma \cdot \varepsilon$, wherein z 912 is a sample of the probabilistic distribution. This may be understood as a kind of reparameterization trick for the VAR, which allows for differentiable sampling in stochastic models. The probabilistic decoder 914 generates a modified hypothesis x' 916 from z. This may produce collision-free dynamically attainable robot motions accompanied by explicit natural language descriptions. This enhances convergence, exposes asymptotic guarantees, and improves trust between humans and robots during task collaboration & knowledge transfer. The dimensions can be varied within a variational subpace.

Abstractive summarization as disclosed herein refers to the process of shortening a set of textual embedding collected along the paths $\epsilon_0', \ldots \epsilon_m'$, to create a subset (a summary) $\varepsilon_\Sigma$ that represents the most important pieces of information in the sequences $\epsilon_0', .. \epsilon_m'$. Existing summarization methods can be divided into two types: extractive and abstractive. The abstractive summarizer generates novel text snippets to convey the most salient concepts prevalent in the source.

Additionally, the process depicted in FIG. 8 can be optimized by extending it with a node rewiring function based on a cost function. In one approach, the cost function for each node may be a convex combination of a distance to the tree and a similarity of the trajectory with respect to the command. This similarity may be determined by evaluating the decoder component. By rewiring nodes according to this cost function, the solution will asymptotically converge to the most similar trajectory.

In some circumstances, it may be desired for robots to actually teaching humans various physical tasks. In such circumstances, the teaching may be aided by examples and/or narrations. For this, the teacher and student roles are reversed. Assuming a robot has learned to perform a task using proper motion styles, the robot can then show a human how the motion must be executed to fulfill task-specific constraints while also describing in natural language at each step the movements being executed. Continuing with the motherboard assembly example from above, the robot could perform the actions while describing them: "gently grasp a memory module from the topmost corners" "lift it carefully until it clears the tray", "quickly transport it over the target memory slot", "precisely align the memory to the slot and gently insert it", "firmly press from the topmost corners to latch it".

Moreover, due to the robot-agnostic description of task initial, final conditions and intermediate points, the human motion can be converted into language descriptions and natural language feedback can be provided. This is possible by using existing human motion capture visual systems to detect the human trajectory, obtaining its description and computing the distance from the executed trajectory to the desired trajectory. Natural language feedback can therefore be communicated, for example "lift the memory higher over the tray" "align the memory to the slot before then insert the memory slower into the slot."

Additional aspects will be disclosed by way of Example:

In Example 1, an apparatus, comprising: a memory, configured to store: a first data set, comprising kinodynamic data representing a plurality of human-directed movements of a robot; and a second data set, comprising linguistic descriptors of the plurality of human-directed movement of the robot; and a processor, configured to generate a third data set based on the first data set and the second data set, wherein the third data set comprises a plurality of motion primitives of the robot.

In Example 2, the apparatus of Example 1, wherein the generating the motion primitives of the robot comprises generating a plurality of end-effector poses from an origin of each of the human-directed movements of the robot, and a corresponding destination from each of the human-directed movements of the robot; wherein each end-effector pose of the plurality of end effector poses comprises a three-dimensional end-effector position, and a three-dimensional end-effector orientation.

In Example 3, the apparatus of Example 2, wherein the three-dimensional end-effector orientation comprises end-effector roll, pitch, and yaw; a rotation matrix of the end-effector; or quaternions of the end-effector.

In Example 4, the apparatus of any one of Examples 1 or 3, further comprising a fourth data set, comprising a plurality of multi-dimensional feature vectors of the robot; wherein the processor is further configured to generate a fifth data set from the third data set and the fourth data set, wherein the fifth data set comprises a plurality of motion trajectories of the robot.

In Example 5, the apparatus of Example 4, wherein the generating the plurality of motion trajectories comprises the processor generating an upper boundary, a lower boundary, and a mean of movements corresponding to the first data set, and generating motion trajectories that follow three-dimensional space surrounding the mean while remaining between the upper boundary and the lower boundary.

In Example 6, the apparatus of Example 4 or 5, further comprising the processor executing a model to generate a linguistic description of each of the plurality of motion trajectories and to label each of the plurality of motion trajectories with a corresponding linguistic description.

In Example 7, the apparatus of any one of Examples 4 or 6, further comprising a probabilistic model; and wherein the processor is further configured to execute the probabilistic model to generate a plurality of kinodynamic hypotheses from the fifth data.

In Example 8, the apparatus of Example 7, wherein each kinodynamic hypothesis of the plurality of kinodynamic hypotheses comprises velocity and/or acceleration data corresponding to a movement of each of a plurality of joints of the robot.

In Example 9, the apparatus of Example 7 or 8, wherein each kinodynamic hypothesis of the plurality of kinodynamic hypotheses comprises data corresponding to a limit of a joint of a plurality of joints of the robot.

In Example 10, the apparatus of any one of Examples 7 to 9, wherein each kinodynamic hypothesis of the plurality of kinodynamic hypotheses comprises data corresponding to a linguistic descriptor of the linguistic descriptors.

In Example 11, the apparatus of any one of Examples 7 to 10, wherein the probabilistic model is a variational autoencoder, which is configured to perform unsupervised learning on the fifth data.

In Example 12, the apparatus of any one of Examples 7 to 11, wherein the linguistic descriptors are first linguistic descriptors; further comprising: first multidimensional pose data, representing an initial pose of the robot; second multidimensional pose data, representing a target pose of the robot; and a second linguistic descriptor; wherein the processor is further configured to select a kinodynamic hypothesis of the plurality of kinodynamic hypotheses based on the first multidimensional pose data, the second multidimensional pose data, and the second linguistic descriptor.

In Example 13, the apparatus of Example 12, wherein the second linguistic descriptor corresponds to an embedding of a feature vector of a plurality of multidimensional feature vectors of the robot.

In Example 14, the apparatus of Example 12 or 13, wherein the selecting the kinodynamic hypothesis of the plurality of kinodynamic hypotheses comprises selecting the kinodynamic hypothesis based on any of a velocity limit of a joint of the robot, an acceleration limit of a joint of the robot, a range of motion of a joint of a robot, or an absence of empty space for execution of the kinodynamic hypothesis.

In Example 15, the apparatus of any one of Examples 2 to 14, wherein the generating the motion primitives of the robot comprises generating a velocity or an acceleration of a movement based on a timestamp indicating a timing of a first position and a timing of a second position, following the first position.

In Example 16, the apparatus of Example 14 or 15, wherein the processor is further configured to use a model to generate a natural language description of a motion corresponding to the selected kinodynamic hypothesis.

In Example 17, the apparatus of Example 16, wherein the processor is configured to cause the robot to generate an audible signal of the natural language description and to concurrently perform the motion corresponding to the selected kinodynamic hypothesis.

In Example 18, the apparatus of any one of Examples 1 or 17, wherein the apparatus is configured as part of a robot or a server.

In Example 19, an apparatus, comprising: a memory, configured to store: a first data set, comprising kinodynamic data representing a plurality of human-directed movements of a robot; and a second data set, comprising linguistic descriptors of the plurality of human-directed movement of the robot; and a processor, configured to generate a third data set based on the first data set and the second data set, wherein the third data set comprises a plurality of motion primitives of the robot.

In Example 20, the apparatus of Example 19, wherein the generating the motion primitives of the robot comprises generating a plurality of end-effector poses from an origin of each of the human-directed movements of the robot, and a corresponding destination from each of the human-directed movements of the robot; wherein each end-effector pose of the plurality of end effector poses comprises a three-dimensional end-effector position, and a three-dimensional end-effector orientation.

In Example 21, the apparatus of Example 20, wherein the three-dimensional end-effector orientation comprises end-effector roll, pitch, and yaw; a rotation matrix of the end-effector; or quaternions of the end-effector.

In Example 22, the apparatus of any one of Examples 19 or 21, further comprising a fourth data set, comprising a plurality of multi-dimensional feature vectors of the robot; wherein the processor is further configured to generate a fifth data set from the third data set and the fourth data set, wherein the fifth data set comprises a plurality of motion trajectories of the robot.

In Example 23, the apparatus of Example 22, wherein the generating the plurality of motion trajectories comprises the processor generating an upper boundary, a lower boundary, and a mean of movements corresponding to the first data set, and generating motion trajectories that follow three-dimensional space surrounding the mean while remaining between the upper boundary and the lower boundary.

In Example 24, the apparatus of Example 22 or 23, further comprising the processor executing a model to generate a linguistic description of each of the plurality of motion trajectories and to label each of the plurality of motion trajectories with a corresponding linguistic description.

In Example 25, the apparatus of any one of Examples 22 or 24, further comprising a probabilistic model; and wherein the processor is further configured to execute the probabilistic model to generate a plurality of kinodynamic hypotheses from the fifth data.

In Example 26, the apparatus of Example 25, wherein each kinodynamic hypothesis of the plurality of kinodynamic hypotheses comprises velocity and/or acceleration data corresponding to a movement of each of a plurality of joints of the robot.

In Example 27, the apparatus of Example 25 or 26, wherein each kinodynamic hypothesis of the plurality of kinodynamic hypotheses comprises data corresponding to a limit of a joint of a plurality of joints of the robot.

In Example 28, the apparatus of any one of Examples 25 to 27, wherein each kinodynamic hypothesis of the plurality of kinodynamic hypotheses comprises data corresponding to a linguistic descriptor of the linguistic descriptors.

In Example 29, the apparatus of any one of Examples 25 to 28, wherein the probabilistic model is a variational autoencoder, which is configured to perform unsupervised learning on the fifth data.

In Example 30, an apparatus, comprising: a memory, configured to store: first multidimensional pose data, representing an initial pose of the robot; second multidimensional pose data, representing a target pose of the robot; and a linguistic descriptor of a desired motion of a robot; a plurality of kinodynamic hypotheses for a movement of the robot; a processor, configured to: select a kinodynamic hypothesis of the plurality of kinodynamic hypotheses based on the first multidimensional pose data, the second multidimensional pose data, and the linguistic descriptor.

In Example 31, the apparatus of Example 30, wherein the linguistic descriptor corresponds to an embedding of a feature vector of a plurality of multi-dimensional feature vectors of the robot.

In Example 32, the apparatus of Example 30 or 31, wherein the selecting the kinodynamic hypothesis of the plurality of kinodynamic hypotheses comprises selecting the kinodynamic hypothesis based on any of a velocity limit of a joint of the robot, an acceleration limit of a joint of the robot, a range of motion of a joint of a robot, or an absence of empty space for execution of the kinodynamic hypothesis.

In Example 33, the apparatus of any one of Examples 31 to 32, wherein the generating the motion primitives of the robot comprises generating a velocity or an acceleration of a movement based on a timestamp indicating a timing of a first position and a timing of a second position, following the first position.

In Example 34, the apparatus of Example 32 or 33, wherein the processor is further configured to use a model to generate a natural language description of a motion corresponding to the selected kinodynamic hypothesis.

In Example 35, the apparatus of Example 34, wherein the processor is configured to cause the robot to generate an audible signal of the natural language description and to concurrently perform the motion corresponding to the selected kinodynamic hypothesis.

In Example 36, a non-transitory computer readable medium, comprising instructions which, if executed by a processor, cause the processor to: generate a third data set based on a first data set comprising kinodynamic data representing a plurality of human-directed movements of a robot, and a second data set, comprising linguistic descriptors of the plurality of human-directed movement of the robot; wherein the third data set comprises a plurality of motion primitives of the robot.

In Example 37, the non-transitory computer readable medium of Example 36, wherein the instructions being configured to cause the processor to generate the motion primitives of the robot comprises the instructions being configured to cause the processor to generate a plurality of end-effector poses from an origin of each of the human-directed movements of the robot, and a corresponding destination from each of the human-directed movements of the robot; wherein each end-effector pose of the plurality of end effector poses comprises a three-dimensional end-effector position, and a three-dimensional end-effector orientation.

In Example 38, the non-transitory computer readable medium of Example 37, wherein the three-dimensional end-effector orientation comprises end-effector roll, pitch, and yaw; a rotation matrix of the end-effector; or quaternions of the end-effector.

In Example 39, the non-transitory computer readable medium of any one of Examples 36 or 38, further comprising a fourth data set, comprising a plurality of multi-dimensional feature vectors of the robot; wherein the instructions are further configured to cause the processor to generate a fifth data set from the third data set and the fourth data set, wherein the fifth data set comprises a plurality of motion trajectories of the robot.

In Example 40, the non-transitory computer readable medium of Example 39, wherein the instructions being configured to cause the processor to generate the plurality of motion trajectories comprises the instructions being configured to cause the processor generate an upper boundary, a lower boundary, and a mean of movements corresponding to the first data set, and to generate motion trajectories that follow three-dimensional space surrounding the mean while remaining between the upper boundary and the lower boundary.

In Example 41, the non-transitory computer readable medium of Example 39 or 40, wherein the instructions are further configured to cause the processor to execute a model to generate a linguistic description of each of the plurality of motion trajectories and to label each of the plurality of motion trajectories with a corresponding linguistic description.

In Example 42, the non-transitory computer readable medium of any one of Examples 39 or 41, further comprising a probabilistic model; wherein the instructions are further configured to cause the processor to execute the probabilistic model to generate a plurality of kinodynamic hypotheses from the fifth data.

In Example 43, the non-transitory computer readable medium of Example 42, wherein each kinodynamic hypothesis of the plurality of kinodynamic hypotheses comprises velocity and/or acceleration data corresponding to a movement of each of a plurality of j oints of the robot.

In Example 44, the non-transitory computer readable medium of Example 42 or 43, wherein each kinodynamic hypothesis of the plurality of kinodynamic hypotheses comprises data corresponding to a limit of a joint of a plurality of j oints of the robot.

In Example 45, the non-transitory computer readable medium of any one of Examples 42 to 44, wherein each kinodynamic hypothesis of the plurality of kinodynamic hypotheses comprises data corresponding to a linguistic descriptor of the linguistic descriptors.

In Example 46, the non-transitory computer readable medium of any one of Examples 42 to 45, wherein the probabilistic model is a variational autoencoder, which is configured to perform unsupervised learning on the fifth data.

In Example 47, the non-transitory computer readable medium of any one of Examples 42 to 46, wherein the linguistic descriptors are first linguistic descriptors; further comprising: first multidimensional pose data, representing an initial pose of the robot; second multidimensional pose data, representing a target pose of the robot; and a second linguistic descriptor; wherein the instructions are further configured to cause the processor to select a kinodynamic hypothesis of the plurality of kinodynamic hypotheses based on the first multidimensional pose data, the second multidimensional pose data, and the second linguistic descriptor.

In Example 48, the non-transitory computer readable medium of Example 47, wherein the second linguistic descriptor corresponds to an embedding of a feature vector of a plurality of multi-dimensional feature vectors of the robot.

In Example 49, the non-transitory computer readable medium of Example 47 or 48, wherein the instructions being configured to cause the processor to select the kinodynamic hypothesis of the plurality of kinodynamic hypotheses comprises the instructions being configured to cause the processor to elect the kinodynamic hypothesis based on any of a velocity limit of a joint of the robot, an acceleration limit of a joint of the robot, a range of motion of a joint of a robot, or an absence of empty space for execution of the kinodynamic hypothesis.

In Example 50, the non-transitory computer readable medium of any one of Examples 37 to 49, wherein the instructions being configured to cause the processor to generate the motion primitives of the robot comprises the instructions being configured to cause the processor to generate a velocity or an acceleration of a movement based on a timestamp indicating a timing of a first position and a timing of a second position, following the first position.

In Example 51, the non-transitory computer readable medium of Example 49 or 50, wherein the instructions are further configured to cause the processor to use a model to generate a natural language description of a motion corresponding to the selected kinodynamic hypothesis.

In Example 52, the non-transitory computer readable medium of Example 51, wherein the instructions are further configured to cause the processor to cause the robot to generate an audible signal of the natural language description and to concurrently perform the motion corresponding to the selected kinodynamic hypothesis.

In Example 53, a non-transitory computer readable medium, comprising instructions that, if executed by a processor, are configured to cause the processor to generate a third data set based on a first data set, comprising kinodynamic data representing a plurality of human-directed movements of a robot, and a second data set, comprising linguistic descriptors of the plurality of human-directed movement of the robot, wherein the third data set comprises a plurality of motion primitives of the robot.

In Example 54, the non-transitory computer readable medium of Example 53, wherein the instructions being configured to cause the processor to generate the motion primitives of the robot comprises the instructions being configured to cause the processor to generate a plurality of end-effector poses from an origin of each of the human-directed movements of the robot, and a corresponding destination from each of the human-directed movements of the robot; wherein each end-effector pose of the plurality of end effector poses comprises a three-dimensional end-effector position, and a three-dimensional end-effector orientation.

In Example 55, the non-transitory computer readable medium of Example 54, wherein the three-dimensional end-effector orientation comprises end-effector roll, pitch, and yaw; a rotation matrix of the end-effector; or quaternions of the end-effector.

In Example 56, the non-transitory computer readable medium of any one of Examples 53 or 55, further comprising a fourth data set, comprising a plurality of multi-dimensional feature vectors of the robot; wherein the instructions are further configured to cause the processor to generate a fifth data set from the third data set and the fourth data set, wherein the fifth data set comprises a plurality of motion trajectories of the robot.

In Example 57, the non-transitory computer readable medium of Example 56, wherein the instructions being configured to cause the processor to generate the plurality of motion trajectories comprises the instructions being configured to cause the processor to generate an upper boundary, a lower boundary, and a mean of movements corresponding to the first data set, and to generate motion trajectories that follow three-dimensional space surrounding the mean while remaining between the upper boundary and the lower boundary.

In Example 58, the non-transitory computer readable medium of Example 56 or 57, wherein the instructions are further configured to cause the processor to execute a model to generate a linguistic description of each of the plurality of motion trajectories and to label each of the plurality of motion trajectories with a corresponding linguistic description.

In Example 59, the non-transitory computer readable medium of any one of Examples 56 or 58, wherein the instructions are further configured to cause the processor to execute the probabilistic model to generate a plurality of kinodynamic hypotheses from the fifth data.

In Example 60, the non-transitory computer readable medium of Example 59, wherein each kinodynamic hypothesis of the plurality of kinodynamic hypotheses comprises velocity and/or acceleration data corresponding to a movement of each of a plurality of joints of the robot.

In Example 61, the non-transitory computer readable medium of Example 59 or 60, wherein each kinodynamic hypothesis of the plurality of kinodynamic hypotheses comprises data corresponding to a limit of a joint of a plurality of joints of the robot.

In Example 62, the non-transitory computer readable medium of any one of Examples 59 to 61, wherein each kinodynamic hypothesis of the plurality of kinodynamic hypotheses comprises data corresponding to a linguistic descriptor of the linguistic descriptors.

In Example 63, the non-transitory computer readable medium of any one of Examples 59 to 62, wherein the probabilistic model is a variational autoencoder, which is configured to perform unsupervised learning on the fifth data.

In Example 64, a non-transitory computer readable medium, comprising instructions which, if executed by a processor, cause the processor to: select a kinodynamic hypothesis of a plurality of kinodynamic hypotheses for movement of a robot based on first multidimensional pose data representing an initial pose of the robot, second multidimensional pose data representing a target pose of the robot, and a linguistic descriptor of a desired motion of a robot.

In Example 65, the non-transitory computer readable medium of Example 64, wherein the linguistic descriptor corresponds to an embedding of a feature vector of a plurality of multi-dimensional feature vectors of the robot.

In Example 66, the non-transitory computer readable medium of Example 64 or 65, wherein the instructions being configured to cause the processor to select the kinodynamic hypothesis of the plurality of kinodynamic hypotheses comprises the instructions being configured to cause the processor to select the kinodynamic hypothesis based on any of a velocity limit of a joint of the robot, an acceleration limit of a joint of the robot, a range of motion of a joint of a robot, or an absence of empty space for execution of the kinodynamic hypothesis.

In Example 67, the non-transitory computer readable medium of any one of Examples 65 to 66, wherein the instructions being configured to cause the processor to generate the motion primitives of the robot comprises the instructions being configured to cause the processor to generate a velocity or an acceleration of a movement based on a timestamp indicating a timing of a first position and a timing of a second position, following the first position.

In Example 68, the non-transitory computer readable medium of Example 66 or 67, wherein the instructions are further configured to cause the processor to use a model to generate a natural language description of a motion corresponding to the selected kinodynamic hypothesis.

In Example 69, the non-transitory computer readable medium of Example 68, wherein the instructions are further configured to cause the processor to cause the robot to generate an audible signal of the natural language description and to concurrently perform the motion corresponding to the selected kinodynamic hypothesis.

In Example 70, a method comprising: generating a third data set based on a first data set comprising kinodynamic data representing a plurality of human-directed movements of a robot, and a second data set, comprising linguistic descriptors of the plurality of human-directed movement of the robot; wherein the third data set comprises a plurality of motion primitives of the robot.

In Example 71, the method of Example 70, wherein the generating the motion primitives of the robot comprises generating a plurality of end-effector poses from an origin of each of the human-directed movements of the robot, and a corresponding destination from each of the human-directed movements of the robot; wherein each end-effector pose of the plurality of end effector poses comprises a three-dimensional end-effector position, and a three-dimensional end-effector orientation.

In Example 72, the method of Example 71, wherein the three-dimensional end-effector orientation comprises end-effector roll, pitch, and yaw; a rotation matrix of the end-effector; or quaternions of the end-effector.

In Example 73, the method of any one of Examples 70 or 72, further comprising a fourth data set, comprising a plurality of multi-dimensional feature vectors of the robot; further comprising generating a fifth data set from the third data set and the fourth data set, wherein the fifth data set comprises a plurality of motion trajectories of the robot.

In Example 74, the method of Example 73, wherein the generating the plurality of motion trajectories comprises generating an upper boundary, a lower boundary, and a mean of movements corresponding to the first data set, and to generate motion trajectories that follow three-dimensional space surrounding the mean while remaining between the upper boundary and the lower boundary.

In Example 75, the method of Example 73 or 74, further comprising executing a model to generate a linguistic description of each of the plurality of motion trajectories and to label each of the plurality of motion trajectories with a corresponding linguistic description.

In Example 76, the method of any one of Examples 73 or 75, further comprising executing a probabilistic model to generate a plurality of kinodynamic hypotheses from the fifth data.

In Example 77, the method of Example 76, wherein each kinodynamic hypothesis of the plurality of kinodynamic hypotheses comprises velocity and/or acceleration data corresponding to a movement of each of a plurality of joints of the robot.

In Example 78, the method of Example 76 or 77, wherein each kinodynamic hypothesis of the plurality of kinodynamic hypotheses comprises data corresponding to a limit of a joint of a plurality of joints of the robot.

In Example 79, the method of any one of Examples 76 to 78, wherein each kinodynamic hypothesis of the plurality of kinodynamic hypotheses comprises data corresponding to a linguistic descriptor of the linguistic descriptors.

In Example 80, the method of any one of Examples 76 to 79, wherein the probabilistic model is a variational autoencoder, which is configured to perform unsupervised learning on the fifth data.

In Example 81, the method of any one of Examples 76 to 80, wherein the linguistic descriptors are first linguistic descriptors; further comprising: selecting a kinodynamic hypothesis of the plurality of kinodynamic hypotheses based on first multidimensional pose data representing an initial pose of the robot, the second multidimensional pose data representing a target pose of the robot, and a second linguistic descriptor.

In Example 82, the method of Example 81, wherein the second linguistic descriptor corresponds to an embedding of a feature vector of a plurality of multi-dimensional feature vectors of the robot.

In Example 83, the method of Example 81 or 82, wherein the selecting the kinodynamic hypothesis of the plurality of kinodynamic hypotheses comprises causing the processor to elect the kinodynamic hypothesis based on any of a velocity limit of a joint of the robot, an acceleration limit of a joint of the robot, a range of motion of a joint of a robot, or an absence of empty space for execution of the kinodynamic hypothesis.

In Example 84, the method of any one of Examples 71 to 83, wherein the generating the motion primitives of the robot comprises generating a velocity or an acceleration of a movement based on a timestamp indicating a timing of a first position and a timing of a second position, following the first position.

In Example 85, the method of Example 83 or 84, further comprising using a model to generate a natural language description of a motion corresponding to the selected kinodynamic hypothesis.

In Example 86, the method of Example 85, further comprising causing the robot to generate an audible signal of the natural language description and to concurrently perform the motion corresponding to the selected kinodynamic hypothesis.

In Example 87, a method, comprising: generating a third data set based on a first data set, comprising kinodynamic data representing a plurality of human-directed movements of a robot, and a second data set, comprising linguistic descriptors of the plurality of human-directed movement of the robot, wherein the third data set comprises a plurality of motion primitives of the robot.

In Example 88, the method of Example 87, wherein the generating the motion primitives of the robot comprises generating a plurality of end-effector poses from an origin of each of the human-directed movements of the robot, and a corresponding destination from each of the human-directed movements of the robot; wherein each end-effector pose of the plurality of end effector poses comprises a three-dimensional end-effector position, and a three-dimensional end-effector orientation.

In Example 89, the method of Example 88, wherein the three-dimensional end-effector orientation comprises end-effector roll, pitch, and yaw; a rotation matrix of the end-effector; or quaternions of the end-effector.

In Example 90, the method of any one of Examples 87 or 89, further comprising a fourth data set, comprising a plurality of multi-dimensional feature vectors of the robot; further comprising generating a fifth data set from the third data set and the fourth data set, wherein the fifth data set comprises a plurality of motion trajectories of the robot.

In Example 91, the method of Example 90, wherein the generating the plurality of motion trajectories comprises generating an upper boundary, a lower boundary, and a mean of movements corresponding to the first data set, and to generate motion trajectories that follow three-dimensional space surrounding the mean while remaining between the upper boundary and the lower boundary.

In Example 92, the method of Example 90 or 91, wherein the executing the model to generate a linguistic description of each of the plurality of motion trajectories and to label each of the plurality of motion trajectories with a corresponding linguistic description.

In Example 93, the method of any one of Examples 90 or 92, further comprising executing the probabilistic model to generate a plurality of kinodynamic hypotheses from the fifth data.

In Example 94, the method of Example 93, wherein each kinodynamic hypothesis of the plurality of kinodynamic hypotheses comprises velocity and/or acceleration data corresponding to a movement of each of a plurality of joints of the robot.

In Example 95, the method of Example 93 or 94, wherein each kinodynamic hypothesis of the plurality of kinodynamic hypotheses comprises data corresponding to a limit of a joint of a plurality of joints of the robot.

In Example 96, the method of any one of Examples 93 to 95, wherein each kinodynamic hypothesis of the plurality of kinodynamic hypotheses comprises data corresponding to a linguistic descriptor of the linguistic descriptors.

In Example 97, the method of any one of Examples 93 to 96, wherein the probabilistic model is a variational autoencoder, which is configured to perform unsupervised learning on the fifth data.

In Example 98, a method, comprising: selecting a kinodynamic hypothesis of a plurality of kinodynamic hypotheses for movement of a robot based on first multidimensional pose data representing an initial pose of the robot, second multidimensional pose data representing a target pose of the robot, and a linguistic descriptor of a desired motion of a robot.

In Example 99, the method of Example 98, wherein the linguistic descriptor corresponds to an embedding of a feature vector of a plurality of multi-dimensional feature vectors of the robot.

In Example 100, the method of Example 98 or 99, wherein the selecting the kinodynamic hypothesis of the plurality of kinodynamic hypotheses comprises selecting the kinodynamic hypothesis based on any of a velocity limit of a joint of the robot, an acceleration limit of a joint of the robot, a range of motion of a joint of a robot, or an absence of empty space for execution of the kinodynamic hypothesis.

In Example 101, the method of any one of Examples 99 to 100, wherein the generating the motion primitives of the robot comprises the generating a velocity or an acceleration of a movement based on a timestamp indicating a timing of a first position and a timing of a second position, following the first position.

In Example 102, the method of Example 100 or 101, wherein the using the model to generate a natural language description of a motion corresponding to the selected kinodynamic hypothesis.
In Example 103, the method of Example 102, wherein robot generating the audible signal of the natural language description and to concurrently perform the motion corresponding to the selected kinodynamic hypothesis.

While the above descriptions and connected figures may depict components as separate elements, skilled persons will appreciate the various possibilities to combine or integrate discrete elements into a single element. Such may include combining two or more circuits for form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method.

All acronyms defined in the above description additionally hold in all claims included herein.

## Claims

**1.** An apparatus, comprising:

a memory, configured to store:

a first data set, comprising kinodynamic data representing a plurality of human-directed movements of a robot; and
a second data set, comprising linguistic descriptors of the plurality of human-directed movement of the robot; and

a processor, configured to generate a third data set based on the first data set and the second data set, wherein the third data set comprises a plurality of motion primitives of the robot.

**2.** The apparatus of claim 1, wherein the generating the motion primitives of the robot comprises generating a plurality of end-effector poses from an origin of each of the human-directed movements of the robot, and a corresponding destination from each of the human-directed movements of the robot;
wherein each end-effector pose of the plurality of end effector poses comprises a three-dimensional end-effector position, and a three-dimensional end-effector orientation.

**3.** The apparatus of claim 2, wherein the three-dimensional end-effector orientation comprises end-effector roll, pitch, and yaw; a rotation matrix of the end-effector; or quaternions of the end-effector.

**4.** The apparatus of any one of claims 1 or 3, further comprising a fourth data set, comprising a plurality of multi-dimensional feature vectors of the robot;

wherein the processor is further configured to generate a fifth data set from the third data set and the fourth data set, wherein the fifth data set comprises a plurality of motion trajectories of the robot; and
preferably wherein the generating the plurality of motion trajectories comprises the processor generating an upper boundary, a lower boundary, and a mean of movements corresponding to the first data set, and generating motion trajectories that follow three-dimensional space surrounding the mean while remaining between the upper boundary and the lower boundary.

**5.** The apparatus of claim 4, further comprising the processor executing a model to generate a linguistic description of each of the plurality of motion trajectories and to label each of the plurality of motion trajectories with a corresponding linguistic description.

**6.** The apparatus of any one of claims 4 or 5, further comprising a probabilistic model; and wherein the processor is further configured to execute the probabilistic model to generate a plurality of kinodynamic hypotheses from the fifth data; and
preferably wherein each kinodynamic hypothesis of the plurality of kinodynamic hypotheses comprises velocity and/or acceleration data corresponding to a movement of each of a plurality of joints of the robot.

**7.** The apparatus of claim 6, wherein each kinodynamic hypothesis of the plurality of kinodynamic hypotheses comprises data corresponding to a limit of a joint of a plurality of joints of the robot.

**8.** The apparatus of claim 6 or 7, wherein each kinodynamic hypothesis of the plurality of kinodynamic hypotheses comprises data corresponding to a linguistic descriptor of the linguistic descriptors.

**9.** The apparatus of any one of claims 6 to 8, wherein the probabilistic model is a variational autoencoder, which is configured to perform unsupervised learning on the fifth data.

**10.** An apparatus, comprising:

a memory, configured to store:

first multidimensional pose data, representing an initial pose of a robot;
second multidimensional pose data, representing a target pose of the robot; and
a linguistic descriptor of a desired motion of a robot;
a plurality of kinodynamic hypotheses for a movement of the robot;

a processor, configured to:
select a kinodynamic hypothesis of the plurality of kinodynamic hypotheses based on the first multidimensional pose data, the second multidimensional pose data, and the linguistic descriptor.

**11.** The apparatus of claim 10, wherein the linguistic descriptor corresponds to an embedding of a feature vector of a plurality of multi-dimensional feature vectors of the robot.

**12.** The apparatus of claim 10 or 11, wherein the selecting the kinodynamic hypothesis of the plurality of kinodynamic hypotheses comprises selecting the kinodynamic hypothesis based on any of a velocity limit of a joint of the robot, an acceleration limit of a joint of the robot, a range of motion of a joint of a robot, or an absence of empty space for execution of the kinodynamic hypothesis; and
preferably further comprising determining a velocity or an acceleration of a movement based on a timestamp indicating a timing of a first position and a timing of a second position, following the first position.

**13.** The apparatus of claim 11 or 12, wherein the processor is further configured to use a model to generate a natural language description of a motion corresponding to the selected kinodynamic hypothesis; and
preferably wherein the processor is configured to cause the robot to generate an audible signal of the natural language description and to concurrently perform the motion corresponding to the selected kinodynamic hypothesis.

**14.** The apparatus of any one of claims 10 to 13, wherein the apparatus is configured as a robot.

**15.** A non-transitory computer readable medium, comprising instructions which, if executed by a processor, cause the processor to:

generate a third data set based on a first data set comprising kinodynamic data representing a plurality of human-directed movements of a robot, and a second data set, comprising linguistic descriptors of the plurality of human-directed movement of the robot;
wherein the third data set comprises a plurality of motion primitives of the robot.

Offline phase
Language semantics embeddings module
Robot manuals & application corpus 102
Unsupervised learning sentence encoder 104
Corpus-semantic sentence to vector $f(S) \to \varepsilon \in R^k$
106
Human descriptive demonstrations
Small-data set: η XR-based human motions narrated demonstration S 112
Bendable motion primitives sampling K variations per demonstration 114
Large data set: η • K motion (kinematic & dynamic) T Trajectories, each with $f(S) \to \varepsilon$
116
Unsupervised learning disentangling variational autoencoder VAE
118
Joint language driven semantic & kinodynamic hypothesis generator $\beta(T,\varepsilon,\sigma) \to T',\varepsilon'$
120
Language-driven robot motion planner
Online phase
Initial end-effector 6D-Pose 132
Target End-effector 6D-Pose: Tf 134
Batch-hypothesis generation: joint kinodynamic & language semantics β-VAE
$\beta(T,\varepsilon,\sigma) \to T',\varepsilon'$
Sampling-base motion planner with generative β-VAE
136
Success kinodynamic plan with language description $[T_0,\ldots,T_{(n-1)}, \varepsilon',]$
Failure

FIG. 1

202
204
206
Robotics-centric Language-embedding Learning
0
Robot Manuals & Application Corpus
Domain-specific Motion-sentence
Corpus: $\Gamma := \{< w_i, (w_j|w_k), (w_l, w_m) >\}$
Dictionary: $H_k$
$f(w \in H_k) \mapsto \epsilon \in R^k$
$f^{-}(\epsilon \in R^k) \mapsto \{(w_i, w_j, w_k) \in H_k\}$


FIG. 2

"Picking approach Slowly"
"Reach pre-grasp Carefully"
"Going action-relevant-zone smoothly"
Simulation or/and
Real-robot Platform
402
404
Dimension 1
Dimension 2
Demo
goal_yd = 0
goal_yd = 1
goal_yd = 2
Position
Velocity
Time
406
408
Language Enhanced Motion-Primitives Collection
Angle
BendedLine
CShape
DoubleBendedLine
GShape
JShape
JShape_2
Khamesh
LShape
Leaf_1
410

FIG. 3

FIG. 4

Self-supervised PMP-base motion Plans Generation at Scale

„Picking approach slowly“

L-PMP
λ

Language-grounded generated trajectories

λ- Samples from a single PMP

**FIG. 5**

601
0
Motion-sentence: Language Description
Command Language-embedding
$\epsilon \in R^k$
606
3
2nd-order
Dynamic
Configuration
$\ddot{T}(t)$
Robot End-effector
Frame
E
t
T(t)
1st-order Dynamic
Configuration
$\dot{T}(t)$
$\theta_{n-1}$
$t_a$
$\theta_n$
2
604
1
$T_0$
602
$\theta_0$
Occupied
Space C
Current Kino-dynamic
Configuration
4
Semantic Kino-dynamic Space
$T_f$
2
Target
Kino-dynamic
Configuration
Robot
$n$-DoFs
B
608
Initial
Kino-dynamic
Configuration
Robot-Instantaneous Setup

FIG. 6

702
5a
Random Variational-shift Sampling Diversity & Asymptotical Convergence Guarantees
Backprop
704
5b
706
5c
708
6
Adaptive-localized Language-embedding
"Picking approach slowly"
$\epsilon'_a \in R^k$
$\theta_a, \dot{\theta}_a, \ddot{\theta}_a, \in R^{3n+k}$
Proposed Kino-dynamic Exploration Configuration
8
$\epsilon'_0, \epsilon'_1, ..., \epsilon'_m$
710
7
$\epsilon' \in R^k$
$\theta, \dot{\theta}, \ddot{\theta}, \in R^{3n}$
Tstart
Tgoal
connect1
connect2
extend1
extend2
q1
q2
712
8
$P = \{\hat{\epsilon} = S((\epsilon'_0, ...\epsilon'_m) \in R^{k \cdot m}, \theta_g, \dot{\theta}_g, \ddot{\theta}_g, \in R^{3n \cdot m})\}$
Linguistic-motoric Abstractive -Summarization Model: Language Description
Proposed Kino-dynamic trajectory

FIG. 7

Initial Position $T_0$ & Description S
802
Sentence to Vector $f(S) \mapsto \varepsilon_0 \in R^k$
804
Add Initial Configuration to Tree $\Upsilon \leftarrow (\varepsilon_0, T_0)$
806
Calculate Kinodynamic Distance from Tree (leaves) to target
808
Target Position $T_f$
810
Reset $\omega$ Hypothesis-fail counter to 0, Unlocks for $\epsilon'_i \neq \epsilon'_{i+1}$
810
Target is Reached
812
True
False
3
Apply Linguistic-motion Abstractive-Summarization Model to $\epsilon'_0 \dots \epsilon'_m$ → Produce Short Natural language description
817
Success
815
$P = \{\hat{\epsilon}, \theta_g, \dot{\theta}_g, \ddot{\theta}_g, \in R^{3n \cdot m}\}$
Quit or Timeout requested?
814
True
False
Failure
816
1
Create AI-Driven Hypothesis Configuration
818
Is Kino-dynamic viable & inside Empty Space
820
True
False
2
Add Configuration to tree & Store Shifting Embedding $\epsilon'_i$
822
Increment Hypothesis-fail $\omega$ +=1
824
Is $\omega$ > Search Limit ~10 (threshold)
826
True
False
4
Locks $\epsilon'_i$ such $\epsilon'_i = \epsilon'_{i+1}$ & creates Hypothesis Configuration with Kinematics and Dynamic subspace
828
Quit or Timeout requested?
830
True
False

FIG. 8

Query: Language Description
Initial Frame
Final Frame
Current Frame
x
902
Probabilistic Encoder
904
μ
906
ϵ
908
σ
910
Variational Steering Handler
z
912
Probabilistic Decoder
914
x'
916
Single-step Motion Hypothesis
Similar Frame
Corresponding Language Description

FIG. 9

Europäisches
Patentamt
European
Patent Office
Office européen
des brevets

# EUROPEAN SEARCH REPORT

Application Number
EP 24 22 3432

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2024 120162 A (MITSUBISHI ELECTRIC CORP) 4 September 2024 (2024-09-04)<br>* the whole document *<br>----- | 1-9,15 | INV.<br>B25J9/16<br>B25J11/00<br>G06F40/30<br>G10L25/30 |

TECHNICAL FIELDS SEARCHED (IPC)

B25J
G10L
G06F
G05B

~~The present search report has been drawn up for all claims~~

1

| Place of search | Date of completion of the search | Examiner |
|---|---|---|
| The Hague | 2 June 2025 | Sollazzo, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

Europäisches
Patentamt
European
Patent Office
Office européen
des brevets

Application Number

EP 24 22 3432

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-9, 15

☐ The present supplementary European search report has been drawn up for those parts of the European patent application which relate to the invention first mentioned in the claims (Rule 164 (1) EPC).

Europäisches Patentamt
European Patent Office
Office européen des brevets

# LACK OF UNITY OF INVENTION SHEET B

Application Number
EP 24 22 3432

The Search Division considers that the present European patent application does not comply with the requirements of unity of invention and relates to several inventions or groups of inventions, namely:

1. claims: 1-9, 15

generating a third data set based on the first data set and the second data set

---

2. claims: 10-14

selecting a kinodynamic hypothesis based on multidimensional pose data and the linguistic descriptor

---

# ANNEX TO THE EUROPEAN SEARCH REPORT ON EUROPEAN PATENT APPLICATION NO.

EP 24 22 3432

This annex lists the patent family members relating to the patent documents cited in the above-mentioned European search report. The members are as contained in the European Patent Office EDP file on
The European Patent Office is in no way liable for these particulars which are merely given for the purpose of information.

02-06-2025

| Patent document cited in search report | Publication date | Patent family member(s) | Publication date |
|---|---|---|---|
| JP 2024120162 A | 04-09-2024 | JP 2024120162 A | 04-09-2024 |
| | | US 2024288870 A1 | 29-08-2024 |

EPO FORM P0459

For more details about this annex : see Official Journal of the European Patent Office, No. 12/82